# EUROPEAN PATENT APPLICATION

(11) **EP 4 471 536 A1**
(43) Date of publication of application: **04.12.2024**
(21) Application number: 23775143.3
(22) Date of filing: 25.01.2023
(51) Int. Cl.: G06F 1/16, H02K 7/116, G09F 9/30

(54) **ELECTRONIC DEVICE COMPRISING DISPLAY**

(30) Priority: 21.03.2022 KR 20220034861; 06.07.2022 KR 20220083423
(71) Applicant: Samsung Electronics Co., Ltd, Suwon-si, Gyeonggi-do 16677 (KR)
(72) Inventor: CHO, Joongyeon, Suwon-si, Gyeonggi-do 16677 (KR); KIM, Hyunsuk, Suwon-si, Gyeonggi-do 16677 (KR); PARK, Sanghyuk, Suwon-si, Gyeonggi-do 16677 (KR); SEO, Soohyun, Suwon-si, Gyeonggi-do 16677 (KR); LEE, Wonho, Suwon-si, Gyeonggi-do 16677 (KR); CHOI, Nakhyun, Suwon-si, Gyeonggi-do 16677 (KR); LEE, Junghyeob, Suwon-si, Gyeonggi-do 16677 (KR); HONG, Hyunju, Suwon-si, Gyeonggi-do 16677 (KR)
(74) Representative: Gulde & Partner
(86) International application number: PCT/KR2023/001144
(87) International publication number: WO 2023/182640

(57) **Abstract**

An electronic device according to an embodiment comprises: a first housing; a second housing; a display comprising a first region and a second region that is deformable according to movement of the second housing; and a motor, wherein the first housing comprises a first edge facing in a first direction and a second edge facing in a second direction that is opposite to the first direction, and comprises a frame cover for accommodating the motor, and the motor is close to the first edge from among the first edge and the second edge, and is spaced apart from the second region when the display is viewed from above.

## Description

### [Technical Field]

Various embodiments relate to an electronic device including a display.

### [Background Art]

In order for the user to easily carry an electronic device, the electronic device may be miniaturized. Although the electronic device is miniaturized, the need for the electronic device in which the size of a display for displaying a content may be changed is increasing so that a user may receive various contents through the electronic device. For example, the electronic device may include the flexible display in which the size of the display exposed to the outside of the electronic device may be changed.

### [Disclosure]

### [Technical Problem]

For example, in the flexible display of the electronic device, an area of the display may be expanded or reduced according to movement of a housing. The electronic device may need to maximize an expandable range of the display in order to provide various types of content to the user. The electronic device may need a structure capable of minimizing thickness of the electronic device so that the user may easily carry the electronic device while maximizing the expandable range of the display.

The technical problems to be achieved in this document are not limited to those described above, and other technical problems not mentioned herein will be clearly understood by those having ordinary knowledge in the art to which the present disclosure belongs, from the following description.

### [Technical Solution]

According to an embodiment, an electronic device may include a first housing, a second housing coupled to the first housing to be slidable in a first direction relative to the first housing, and the display including a first region contacted with a surface of the second housing and a second region deformable according to movement of the second housing. According to an embodiment, the electronic device may include a motor disposed in the first housing and to provide driving force to the second housing. According to an embodiment, the first housing may include a frame cover including a first periphery facing the first direction and a second periphery opposite to the first periphery and facing a second direction opposite to the first direction, and accommodating the motor. According to an embodiment, the motor may be close to the first periphery among the first periphery and the second periphery. According to an embodiment, the motor may be spaced apart from the second region, when the display is viewed from above.

According to an embodiment, an electronic device may include a first housing, a second housing coupled to the first housing to be slidable in the first direction relative to the first housing, and a display including a first region contacted with a surface of the second housing and a second region deformable according to movement of the second housing. According to an embodiment, the electronic device may include a motor disposed in the first housing and to provide driving force to the second housing, a pinion gear rotatably coupled to the motor, and a rack gear disposed in the second housing and movable according to a rotation of the pinion gear by engaging with the pinion gear. According to an embodiment, the first housing may include a first periphery facing the first direction, a second periphery spaced from the first periphery and facing a second direction opposite to the first direction, a third periphery perpendicular to the first periphery and accommodating the rack gear, a fourth periphery parallel to the third periphery and opposite to the third periphery, and the fame cover accommodating the motor. According to an embodiment, the motor is closer to the first periphery among the first periphery and the second periphery. According to an embodiment, the motor may be spaced apart from a portion of the second region disposed in the second housing, when the display is viewed from above.

### [Advantageous Effects]

According to an embodiment, the electronic device can provide a structure capable of maximizing the expandable range of the display by a motor disposed on one side of the frame cover. According to an embodiment, the electronic device can have a relatively thin thickness by a motor that does not overlap a part of the display.

The effects that can be obtained from the present disclosure are not limited to those described above, and any other effects not mentioned herein will be able to be clearly understood by those having ordinary knowledge in the art to which the present disclosure belongs, from the following description.

### [Description of the Drawings]

FIG. 1 is a block diagram illustrating an electronic device a network environment according to various embodiments.
FIG. 2A is a front view of a first state of an electronic device according to an embodiment.
FIG. 2B is a rear view of a first state of an electronic device according to an embodiment.
FIG. 2C is a front view of a second state of an electronic device according to an embodiment.
FIG. 2D is a rear view of a second state of an electronic device according to an embodiment.
FIG. 3A is an exploded perspective view of an electronic device according to an embodiment.
FIG. 3B is a cross-sectional view illustrating an example of an electronic device cut along line A-A' of FIG. 2A according to an embodiment.
FIG. 4A is a rear view of a first state of an electronic device from which a book cover is removed according to an embodiment.
FIG. 4B is a rear view of a second state of an electronic device from which a book cover is removed according to an embodiment.
FIG. 5 is a cross-sectional view illustrating an example of an electronic device cut along line B-B' of FIG. 4A according to an embodiment.
FIG. 6 is a rear view of a front cover of the second housing of an electronic device according to an embodiment.

### [Mode for Invention]

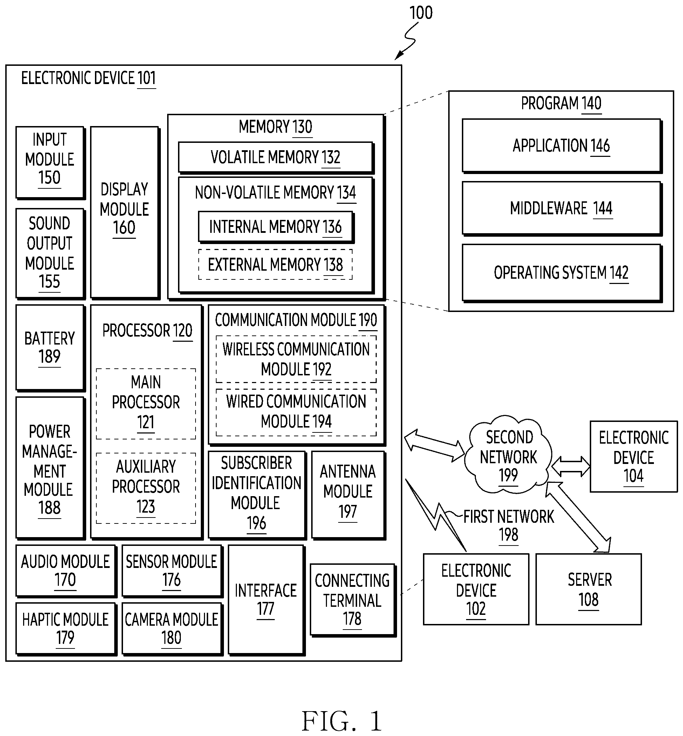

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or the server108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

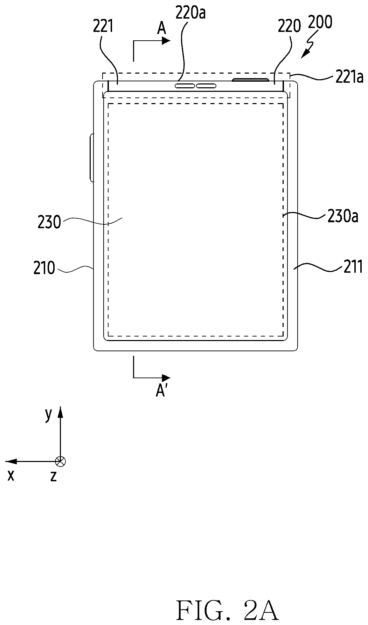

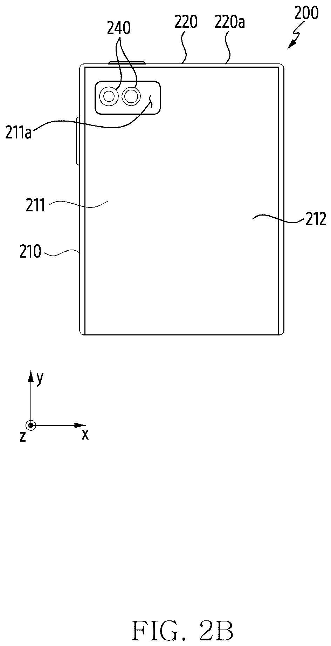

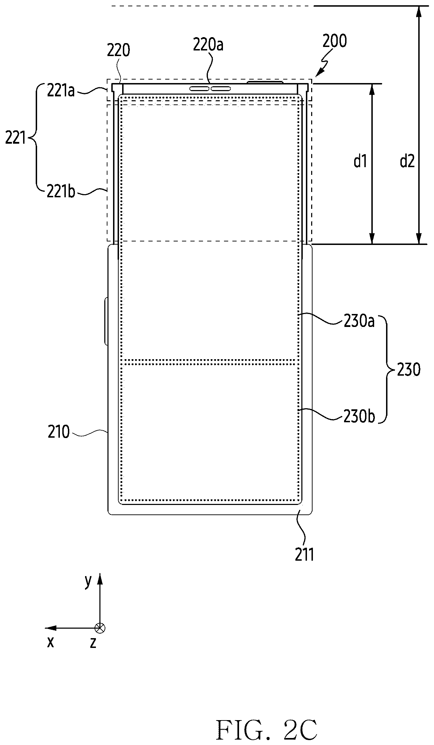

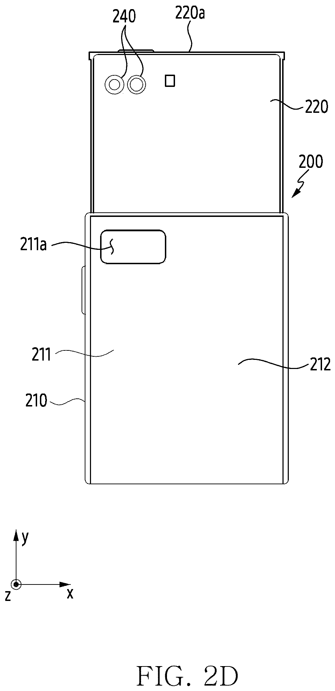

FIG. 2A is a front view of a first state of an electronic device according to an embodiment, FIG. 2B is a rear view of a first state of an electronic device according to an embodiment, FIG. 2C is a front view of a second state of an electronic device according to an embodiment, and FIG. 2D is a rear view of a second state of an electronic device according to an embodiment.

Referring to FIGS. 2A, 2B, 2C, and 2D, the electronic device 200 (e.g., an electronic device 101 of FIG. 1) according to an embodiment may include a first housing 210, a second housing 220, a display 230 (e.g., a display module 160 of FIG. 1), and a camera 240 (e.g., a camera module 180 of FIG. 1). According to an embodiment, the second housing 220 may be slidable relative to the first housing 210. For example, the second housing 220 may move within a designated distance along a first direction (e.g., +y direction) relative to the first housing 210. When the second housing 220 moves along the first direction, the distance between a side 220a of the second housing 220 facing the first direction and the first housing 210 may increase. For another example, the second housing 220 may move within the designated distance along a second direction (e.g., -y direction) opposite the first direction relative to the first housing 210. When the second housing 220 moves along the second direction, the distance between the side 220a of the second housing 220 facing the first direction and the first housing 210 may decrease. According to an embodiment, the second housing 220 may perform rectilinear reciprocating motion relative to the first housing 210 by relatively sliding relative to the first housing 210. For example, at least a portion of the second housing 220 may be insertable into the first housing 210 or may be extractable from the first housing 210.

According to an embodiment, the electronic device 200 may be referred to as a "slidable electronic device" as the second housing 220 is designed to be slidable relative to the first housing 210. According to an embodiment, the electronic device 200 may be referred to as a "rollable electronic device" as at least the portion of the display 230 is designed to be wound inside the second housing 220 (or the first housing 210) based on the slide movement of the second housing 220.

According to an embodiment, a first state of the electronic device 200 may be defined as a state in which the second housing 220 has moved in the second direction (e.g., a contraction state, or a slide-in state). For example, in the first state of the electronic device 200, the second housing 220 may be movable in the first direction, but may not be movable in the second direction. In the first state of the electronic device 200, the distance between the side 220a of the second housing 220 and the first housing 210 may increase as the second housing 220 moves, but may not decrease. For another example, in the first state of the electronic device 200, the portion of the second housing 220 may be extractable from the inside of the first housing 210, but may not be insertable. According to an embodiment, the first state of the electronic device 200 may be defined as the state in which a second region 230b of the display 230 is not visually exposed from the outside of the electronic device 200. For example, in the first state of the electronic device 200, the second region 230b of the display 230 may be located in the inside of the internal space (not illustrated) of the electronic device 200 formed by the first housing 210 and/or the second housing 220, and may not be visible from the outside of the electronic device 200.

According to an embodiment, a second state of the electronic device 200 may be defined as the state in which the second housing 220 has moved in the first direction (e.g., an extended state, or a slide-out state). For example, in the second state of the electronic device 200, the second housing 220 may be movable in the second direction, but may not be movable in the first direction. In the second state of the electronic device 200, the distance between the side 220a of the second housing 220 and the first housing 210 may decrease as the second housing 220 moves, but may not increase. For another example, in the second state of the electronic device 200, the portion of the second housing 220 may be insertable into the first housing 210, but may not be extractable from the first housing 210. According to an embodiment, the second state of the electronic device 200 may be defined as the state in which the second region 230b of the display 230 is visually exposed from the outside of the electronic device 200. For example, in the second state of the electronic device 200, the second region 230b of the display 230 may be extractable from the internal space of the electronic device 200 and visible from the outside of the electronic device 200.

According to an embodiment, when the second housing 220 moves from the first housing 210 in the first direction, at least the portion of a second housing 220 and/or the second region 230b of the display 230 may be extractable from the first housing 210 by an extractable length d1 corresponding to the moving distance of the second housing 220. According to an embodiment, the second housing 220 may reciprocate within the designated distance d2. According to an embodiment, the extractable length d1 may have a size of approximately 0 to the designated distance d2.

According to an embodiment, the state of the electronic device 200 may be convertible between the second state and/or the first state, either by a manual operation by a user or by an automatic operation by a driving module (not illustrated) disposed inside the first housing 210 or the second housing 220. According to an embodiment, an operation of the driving module may be triggered based on a user input. According to an embodiment, the user input for triggering the operation of the driving module may include a touch input, a force touch input, and/or a gesture input through the display 230. According to another embodiment, the user input for triggering the operation of the driving module may include a voice input or an input of a physical button exposed to the outside of the first housing 210 or the second housing 220. According to an embodiment, the driving module may be driven in a semi-automatic manner in which the operation is triggered when a manual operation by an external force of the user is detected.

According to an embodiment, the first state of the electronic device 200 may be referred to as a first shape, and the second state of the electronic device 200 may be referred to as a second shape. For example, the first shape may include a normal state, a reduced state, or a closed state, and the second shape may include an open state. According to an embodiment, the electronic device 200 may form a third state (e.g., an intermediate state) that is the state between the first state and the second state. For example, the third state may be referred to as a third shape, and the third shape may include a free stop state.

According to an embodiment, the display 230 may be visible (or viewable) from the outside through the front direction (e.g., -z direction) of the electronic device 200 so that visual information may be displayed to the user. For example, the display 230 may include a flexible display. According to an embodiment, the display 230 may be disposed in the second housing 220 and may be extracted from the internal space (not illustrated) of the electronic device 200 or may be inserted into the internal space of the electronic device 200 according to movement of the second housing 220. The internal space of the electronic device 200 may mean a space in the first housing 210 and the second housing 220 formed by coupling the first housing 210 and the second housing 220. For example, in the first state of the electronic device 200, at least the portion of the display 230 may be rolled into the internal space of the electronic device 200 and inserted. When the second housing 220 moves in the first direction, in the state in which at least the portion of the display 230 is inserted into the internal space of the electronic device 200, at least the portion of the display 230 may be extractable from the internal space of the electronic device 200. For another example, when the second housing 220 moves in the second direction, at least the portion of the display 230 may be rolled into the electronic device 200 and inserted into the internal space of the electronic device 200. As at least the portion of the display 230 is extracted or inserted, an area of the display 230 visible from the outside of the electronic device 200 may be expanded or reduced. According to an embodiment, the display 230 may include a first region 230a and a second region 230b.

According to an embodiment, the first region 230a of the display 230 may mean an area of the display 230 that may be fixedly visible from the outside of the electronic device 200 regardless of whether the electronic device 200 is in the second state or the first state. For example, the first region 230a may mean a partial area of the display 230 that is not rolled into the internal space of the electronic device 200. According to an embodiment, when the second housing 220 moves, the first region 230a may move together with the second housing 220. For example, when the second housing 220 moves along the first direction or the second direction, the first region 230a may move along the first direction or the second direction on a front surface of the electronic device 200 together with the second housing 220.

According to an embodiment, the second region 230b of the display 230 is connected to the first region 230a and may be inserted into the internal space of the electronic device 200 or may be extracted out from the internal space of the electronic device 200 according to movement of the second housing 220. For example, the second region 230b of the display 230 may be inserted into the internal space of the electronic device 200 in a rolled state in the first state of the electronic device 200. The second region 230b of the display 230 may be inserted into the internal space of the electronic device 200 in the first state of the electronic device 200 and may not be visible from the outside. For another example, the second region 230b of the display 230 may be extracted from the internal space of the electronic device 200 in the second state of the electronic device 200. The second region 230b of the display 230 may be visible from the outside of the electronic device 200 in the second state.

According to an embodiment, in the first state of the electronic device 200, the area of the display 230 visible from the outside of the electronic device 200 may include only the first region 230a of the display 230. The area of the display 230 visible from the outside of the electronic device 200 in the second state of the electronic device 200 may include at least the portion of the first region 230a and the second region 230b of the display 230.

According to an embodiment, the first housing 210 of the electronic device 200 may include a book cover 211 surrounding the internal space of the first housing 210 and a rear plate 212 surrounding a rear surface of the book cover 211. The second housing 220 of the electronic device 200 may include a front cover 221 surrounding the internal space of the electronic device 200.

According to an embodiment, the front cover 221 may include a first cover area 221a of the front cover 221 that is not inserted into the inside of the first housing 210 and a second cover area 221b that is inserted into or extracted from the first housing 210. The first cover area 221a of the front cover 221 may always be visible regardless of whether the electronic device 200 is in the second state and the first state. According to an embodiment, at least the portion of the first cover area 221a of the front cover 221 may form the side 220a of the second housing 220. According to an embodiment, the second cover area 221b of the second housing 220 may not be visible in the first state, but may be visible in the second state.

The camera 240 may obtain an image of a subject based on receiving light from the outside of the electronic device 200. According to an embodiment, the camera 240 may include one or more lenses, an image sensor, and/or an image signal processor. According to an embodiment, the camera 240 may be disposed in the second housing 220 to face the rear of the electronic device 200 opposite to the front of the electronic device 200 in which the first region 230a of the display 230 is disposed. For example, the camera 240 is disposed on the front cover 221 of the second housing 220, and when the electronic device 200 is in the first state, it may be visible from the outside of the electronic device 200 through an opening 211a formed in the book cover 211. For another example, the camera 240 is disposed on the front cover 221 of the second housing 220 and is covered by the book cover 211 and/or the rear plate 212 when the electronic device 200 is in the first state, so that it may not be visible from the outside of the electronic device 200.

According to an embodiment, the camera 240 may include a plurality of cameras. For example, the camera 240 may include a wide-angle camera, an ultra-wide-angle camera, a telephoto camera, a proximity camera, and/or a depth camera. However, the camera 240 is not necessarily limited to including the plurality of cameras, and may include one camera.

According to an embodiment, the camera 240 may further include a camera (not illustrated) aimed at the front of the electronic device 200 in which the first region 230a of the display 230 is disposed. In case that the camera 240 faces the front of the electronic device 200, the camera 240 may be an under-display camera (UDC) disposed below (e.g., in the +z direction from the display 230) the display 230. In case that the camera 240 is the under-display camera, one area of the display 230 corresponding to the location of the camera 240 may not include an inactive area. However, an example in which camera 240 is disposed is not limited thereto. For example, camera 240 may be a punch hole camera disposed under display 230. In case that the camera 240 is the punch hole camera, one area of the display 230 corresponding to the location of the camera 240 may include an inactive area.

According to an embodiment, the electronic device 200 may include a sensor module (not illustrated) and/or a camera module (not illustrated) disposed under the display 230. The sensor module may detect an external environment based on information (e.g., light) received through the display 230. According to an embodiment, the sensor module may include at least one of a receiver, a proximity sensor, an ultrasonic sensor, a gesture sensor, a gyro sensor, a pressure sensor, a magnetic sensor, an acceleration sensor, a grip sensor, a color sensor, an infrared sensor (IR) sensor, a biometric sensor, a temperature sensor, a humidity sensor, a motor encoder, or an indicator. According to an embodiment, at least the portion of sensor module of the electronic device 200 may be visually exposed from the outside through a partial area of the display 230. According to an embodiment, the electronic device 200 may detect an extraction length (e.g., d1 or d2) using a sensor module. According to an embodiment, the electronic device 200 may generate extractive information on the degree of extraction detected by the sensor. For example, the electronic device 200 may detect and/or check the degree of extraction of the second housing 220 using extractive information. According to an embodiment, the extractive information may include information on the extraction length of the second housing 220.

According to an embodiment, the coupling form of the first housing 210 and the second housing 220 is not limited to a shape and a coupling illustrated in FIGS. 2A, 2B, 2C, and 2D, and may be implemented by a combination and/or a coupling of other shape or component.

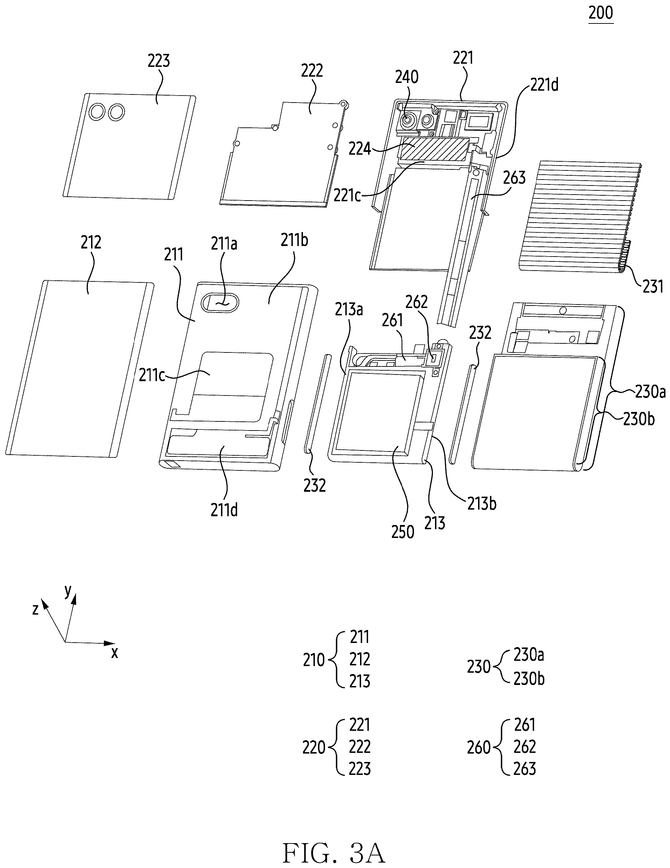

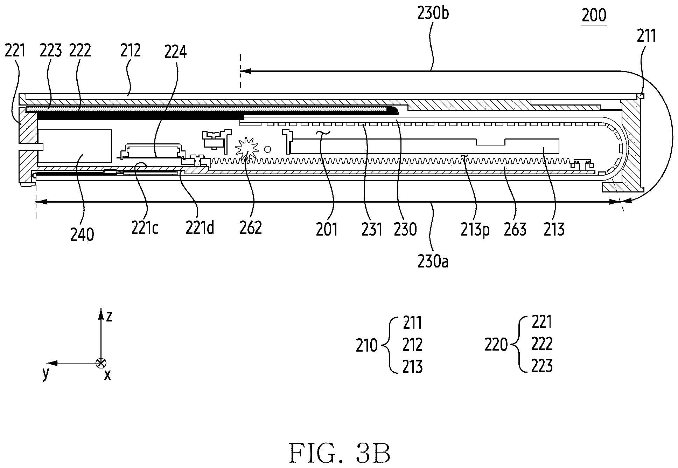

FIG. 3A is an exploded perspective view of an electronic device according to an embodiment, and FIG. 3B is a cross-sectional view illustrating an example of an electronic device cut along line A-A' of FIG. 2A according to an embodiment.

Referring to FIGS. 3A and 3B, the electronic device 200 according to an embodiment may include a first housing 210, a second housing 220, a display 230, a camera 240, a battery 250 (e.g., the battery 189 of FIG. 1) and a driving unit 260. According to an embodiment, the first housing 210 and the second housing 220 may be coupled to each other and form an internal space 201 of the electronic device 200. For example, in a first state of the electronic device 200, a second region 230b of the display 230 may be accommodated in the internal space 201.

According to an embodiment, the first housing 210 may include a book cover 211, a rear plate 212, and a frame cover 213. According to an embodiment, the book cover 211, the rear plate 212, and the frame cover 213 included in the first housing 210 are coupled with each other so that when the second housing 220 moves relative to the first housing 210, it may not move.

According to an embodiment, the book cover 211 may form at least a portion of the outer surface of the electronic device 200. For example, the book cover 211 may form at least the portion of the side of the electronic device 200 and at least the portion of a rear surface of the electronic device 200. According to an embodiment, the book cover 211 may provide a surface on which the rear plate 212 is mounted. The rear plate 212 may be mounted on one surface 211b of the book cover 211.

According to an embodiment, a wireless charging antenna 211c may be disposed on one surface 211b of the book cover 211. The wireless charging antenna 211c may transmit a received power to the battery 250 based on receiving power from the outside of the electronic device 200. The power transmitted to the battery 250 may charge the battery 250. For example, the wireless charging antenna 211c may be referred to as a wireless power consortium (WPC) antenna, but is not limited thereto. According to an embodiment, at least the portion of the book cover 211 may function as an antenna radiator by including a conductive material. For example, the portion of the book cover 211 containing a conductive material may be divided by another portion of the book cover 211 containing a non-conductive material, and may form the antenna radiator.

According to an embodiment, the printed circuit board 211d may be disposed on one surface 211b of the book cover 211. The printed circuit board 211d may electrically connect electronic components disposed on the book cover 211. According to an embodiment, the wireless charging antenna 211c and the printed circuit board 211d may be electrically connected to another printed circuit board 224 disposed on the front cover 221.

According to an embodiment, the frame cover 213 may support internal components of the electronic device 200. For example, the frame cover 213 may accommodate at least the portion of the battery 250 and the driving unit 260. The battery 250 and the driving unit 260 may be accommodated in at least one of a recess or a hole included in the frame cover 213. According to an embodiment, the frame cover 213 may be surrounded by the book cover 211. For example, in the first state of the electronic device 200, one surface 213a of the frame cover 213 on which the battery 250 is disposed may face the book cover 211 and/or the second region 230b of the display 230. For another example, in the first state of the electronic device 200, the other surface 213b of the frame cover 213 facing the one surface 213a of the frame cover 213 may face a first region 230a of the display 230 or the front cover 221. For example, the frame cover 213 may include aluminum as a material, but is not limited thereto.

According to an embodiment, the second housing 220 may include a front cover 221, a rear cover 222, and a slide cover 223. According to an embodiment, the front cover 221, the rear cover 222, and the slide cover 223 are coupled with each other, and move together with the second housing 220 when the second housing 220 relatively moves relative to the first housing 210. The front cover 221 may support internal components of the electronic device 200. For example, the camera 240 may be disposed on one surface 221c of the front cover 221 facing an internal space 201. The other surface 221d of the front cover 221 facing one surface 221c of the front cover 221 may face the first region 230a of the display 230 when the electronic device 200 is in the first state. According to an embodiment, the rear cover 222 may be coupled to the front cover 221, and may protect components of the electronic device 200 disposed on the front cover 221. For example, the rear cover 222 may cover the portion of one surface 221c of the front cover 221. According to an embodiment, the slide cover 223 may be disposed on the rear cover 222, and may form an outer surface of the electronic device 200 together with the rear plate 212 and the book cover 211. The slide cover 223 may be coupled to one surface of the rear cover 222, and may protect the rear cover 222 and/or the front cover 221.

According to an embodiment, another printed circuit board 224 distinguished from the printed circuit board 211d may electrically connect various electronic components of the electronic device 200. For example, the processor (e.g., processor 120 of FIG. 1) may be disposed on another printed circuit board 224 and electrically connected to electronic components (e.g., display 230, camera 240, battery 250). Another printed circuit board 224 may be referred to as the main printed circuit board of the electronic device 200. According to an embodiment, the other printed circuit board 224 may be disposed in the second housing 220. For example, the other printed circuit board 224 may be disposed on one surface 221c of the front cover 221.

According to an embodiment, when the electronic device 200 is in the first state, the display 230 may be bent by at least the portion of the display 230 being rolled into the internal space 201. According to an embodiment, the display 230 may cover at least the portion of the frame cover 213 and at least the portion of the front cover 221. For example, when the electronic device 200 is in the first state, the display 230 may cover the other surface 221d of the front cover 221, pass between the front cover 221 and the book cover 211, and extend toward the internal space 201. The display 230 may surround the frame cover 213 after passing between the front cover 221 and the book cover 211. The display 230 may cover one surface 213a of the frame cover 213 in the internal space 201. According to an embodiment, when the second housing 220 moves in a first direction, the second region 230b of the display 230 may be extracted from the internal space 201. For example, as the second housing 220 moves in the first direction, the display 230 may pass between the front cover 221 and the book cover 211 and may be extracted from the internal space 201.

According to an embodiment, the first region 230a of the display 230 may be in contact with the other surface 221d of the front cover 221. For example, the first region 230a may extend parallel to the other surface 221d of the front cover 221 while contacting the other surface 221d of the front cover 221. By extending parallel to the other surface 221d of the front cover 221, the first region 230a may have a substantially planar shape. According to an embodiment, the first region 230a of the display 230 may not be deformed according to movement of the second housing 220. For example, the first region 230a may move as the second housing 220 moves while maintaining the planar shape.

According to an embodiment, the second region 230b of the display 230 may be deformable according to movement of the second housing 220. For example, when the electronic device 200 is in the first state, the second region 230b may be bent with curvature in the internal space 201 of the electronic device 200. When the second housing 220 moves in the first direction (e.g., +y direction), at least the portion of the second region 230b may be extracted from the internal space 201 of the electronic device 200 and parallel to the other surface 221d of the front cover 221. When at least the portion of the second region 230b is parallel to the other surface 221d of the front cover 221, at least the portion of the second region 230b does not have curvature and may have the planar shape. For another example, when the second housing 220 moves in the second direction (e.g., -y direction), at least the portion of the second region 230b may be inserted into the internal space 201 of the electronic device 200. At least the portion of the second region 230b may be bent to have curvature while being inserted into the internal space 201 of the electronic device 200.

According to an embodiment, the electronic device 200 may include a guide member 231 and a guide rail 232 supporting the display 230. The guide member 231 may include a plurality of bars coupled to each other and may be manufactured in a shape corresponding to the shape of the second region 230b of the display 230. For example, the guide member 231 may include the plurality of bars extending in a third direction (e.g., +x direction) perpendicular to the first direction (e.g., +y direction). The guide member 231 may be disposed on the second region 230b of the display 230. According to an embodiment, as the display 230 moves, the guide member 231 may move together with the display 230. According to an embodiment, in the first state in which the second region 230b of the display 230 is wound in the internal space 201, the guide member 231 may be wound in the internal space 201 together with the second region 230b of the display 230.

According to an embodiment, the guide rail 232 may guide movement of the guide member 231. For example, as the display 230 moves, the guide member 231 may move along the guide rail 232 coupled to the frame cover 213. According to an embodiment, the guide rail 232 may include the plurality of guide rails 232 spaced apart from and disposed each other at both peripheries of the frame cover 213. For example, the plurality of guide rails 232 may be disposed at both peripheries of the frame cover 213 spaced in the third direction (e.g., +x direction) perpendicular to the first direction.

According to an embodiment, the driving unit 260 may provide driving force to the second housing 220 so that the second housing 220 may relatively move relative to the first housing 210. According to an embodiment, the driving unit 260 may include a motor 261, a pinion gear 262, and a rack gear 263. The motor 261 may receive power from the battery 250 and provide driving power to the second housing 220. According to an embodiment, the motor 261 may be disposed on the first housing 210 and may not move when the second housing 220 moves relative to the first housing 210. For example, the motor 261 may be disposed in the recess formed in the frame cover 213. According to an embodiment, the pinion gear 262 is coupled to the motor 261 and may rotate by driving force provided from the motor 261. According to an embodiment, the rack gear 263 engages with the pinion gear 262 and may move according to a rotation of the pinion gear 262. For example, the rack gear 263 may perform rectilinear reciprocating motion in the first direction or the second direction according to the rotation of the pinion gear 262. According to an embodiment, the rack gear 263 may be disposed in the second housing 220. For example, the rack gear 263 may be coupled to the front cover 221 included in the second housing 220. According to an embodiment, the rack gear 263 may be movable inside the operating space 213p formed in the frame cover 213.

According to an embodiment, when the pinion gear 262 rotates along a first rotation direction (e.g., clockwise in FIG. 3B), the rack gear 263 may move in the first direction (e.g., +y direction). When the rack gear 263 moves along the first direction, the second housing 220 coupled to the rack gear 263 may move along the first direction. As the second housing 220 moves along the first direction, the area of the display 230 visible from the outside of the electronic device 200 may be expanded. When the pinion gear 262 rotates along the second rotation direction (e.g., counterclockwise in FIG. 3B), the rack gear 263 may move in the second direction (e.g., -y direction). When the rack gear 263 moves along the second direction, the second housing 220 coupled to the rack gear 263 may move along the second direction. As the second housing 220 moves along the second direction, the area of the display 230 visible from the outside of the electronic device 200 may be reduced.

In the above description, it has been described that the motor 261 and the pinion gear 262 are disposed in the first housing 210 and the rack gear 263 is disposed in the second housing 220, but embodiments may not be limited thereto. According to embodiments, the motor 261 and the pinion gear 262 may be disposed in the second housing 220, and the rack gear 263 may be disposed in the first housing 210.

For example, the display 230 may be expanded or reduced according to movement of the second housing 220 in an expandable range (e.g., a designated range d2 of FIGS. 2C and 2). Since various content may be provided to a user, as the expandable range of the display 230 increases, the electronic device 200 may need a structure capable of maximizing the expandable range of the display 230. The electronic device 200 may need a structure capable of minimizing the size of the electronic device 200 so that the user may easily carry the electronic device 200 while maximizing the expandable range of the display 230. Hereinafter, the structure capable of improving the portability of the electronic device 200 while maximizing the expandable range of the display 230 will be described in detail.

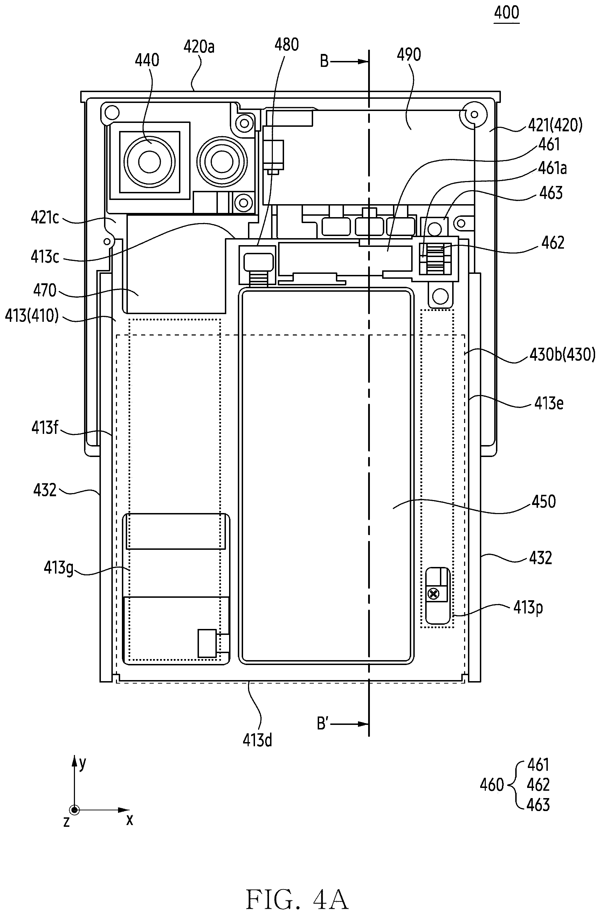

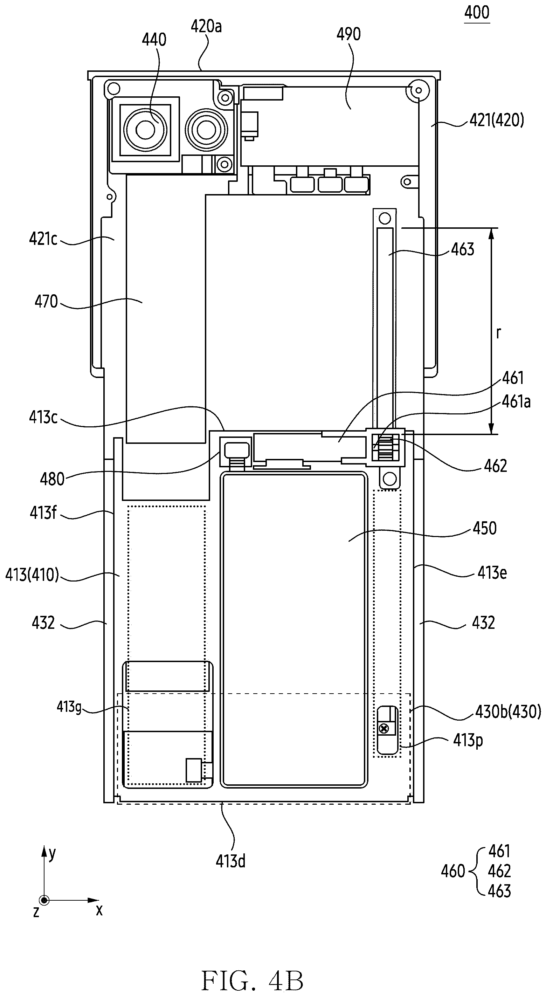

FIG. 4A is a rear view of a first state of an electronic device from which a book cover is removed according to an embodiment, and FIG. 4B is a rear view of a second state of an electronic device from which a book cover is removed according to an embodiment.

Referring to FIGS. 4A and 4B, an electronic device 400 (e.g., an electronic device 101 of FIG. 1 and/or an electronic device 200 of FIGS. 3A and 3B) according to an embodiment may include a first housing 410, a second housing 420, a display 430, a camera 440, a battery 450, a driving unit 460, a first printed circuit board 470, a second printed circuit board 480, and a third printed circuit board 490. Since the first housing 410, the second housing 420, the display 430, the camera 440, the battery 450, and the driving unit 460 of FIGS. 4A and 4B may be substantially the same as the first housing 210, the second housing 220, the display 230, the camera 240, the battery 250, and the driving unit 260 of FIGS. 3A and 3B, respectively, repeated descriptions will be omitted.

According to an embodiment, the second housing 420 may be coupled to the first housing 410 to be slidable relative to the first housing 410. For example, the second housing 420 may be movable in a first direction (e.g., in the +y direction) relative to the first housing 410, or in a second direction (e.g., in the -y direction) opposite to the first direction. The first direction may be a direction in which an area of the display 430 viewablefrom the outside of the electronic device 400 increases according to movement of the second housing 420. The second direction may be a direction in which an area of the display 430 viewable from the outside of the electronic device 400 is reduced according to movement of the second housing 420.

According to an embodiment, the state of the electronic device 400 may include a first state in which the second housing 420 is movable in the first direction among the first direction and the second direction, and a second state in which the second housing 420 is movable in the second direction among the first direction and the second direction. For example, when the electronic device 400 is in the first state, the second housing 420 may be movable only in the first direction and may not be movable in the second direction. For another example, when the electronic device 400 is in the second state, the second housing 420 may be movable only in the second direction and may not be movable in the first direction.

According to an embodiment, the first housing 410 may include a frame cover 413. The frame cover 413 may support at least a portion of the battery 450 and the driving unit 460. According to an embodiment, the frame cover 413 may include a first periphery 413c facing the first direction and a second periphery 413d opposite to the first periphery 413c facing the second direction opposite to the first direction. According to an embodiment, the frame cover 413 may include a third periphery 413e that is substantially perpendicular to the first periphery 413c, and a fourth periphery 413f that is substantially perpendicular to the third periphery 413e and is opposite to the third periphery 413e. Among areas included in one component, the periphery may mean one area including a boundary that distinguishes the one component from other components, and the expression may be used in the same manner unless otherwise stated below. For example, the first periphery 413c may include the boundary of the frame cover 413 facing the first direction. The second periphery 413d may include the boundary of the frame cover 413 spaced apart from the first periphery 413c in the second direction and facing the second direction. The third periphery 413e may extend from the second periphery 413d to the first periphery 413c along the first direction. The fourth periphery 413f may extend from the second periphery 413d to the first periphery 413c along the first direction. The fourth periphery 413f may be opposite to the third periphery 413e and may be spaced apart from the third periphery 413e.

According to an embodiment, the display 430 may include a first region (e.g., a first region 330a of FIGS. 3A and 3B) and a second region 430b (e.g., a second region 430b of FIGS. 3A and 3B). According to an embodiment, the display 430 may cover the portion of the frame cover 413. For example, the second region 430b of the display 430 may overlap the portion of the frame cover 413 including the second periphery 413d among the first periphery 413c and the second periphery 413d of the frame cover 413 when looking at the display 430 from above (e.g., -z direction). For another example, the second region 430b may cover the second periphery 413d, the portion of the third periphery 413e, and the portion of the fourth periphery 413f of the frame cover 413. The second region 430b may not cover the first periphery 413c. According to an embodiment, the display 430 may be referred to as a rollable display and/or a flexible display.

According to an embodiment, a guide rail 432 (e.g., a guide rail 332 of FIGS. 3A and 3B) may guide movement of a guide member (e.g., a guide member 331 of FIGS. 3A and 3B). According to an embodiment, the guide rail 432 may be disposed at both peripheries of the frame cover 413 spaced apart from each other along the third direction (e.g., +x direction) perpendicular to the first direction. For example, the guide rail 432 may include a plurality of guide rails 432 disposed at the third periphery 413e and the fourth periphery 413f, respectively.

According to an embodiment, the battery 450 may be disposed in the frame cover 413. For example, the battery 450 may be spaced apart from the first periphery 413c, the second periphery 413d, the third periphery 413e, and the fourth periphery 413f of the frame cover 413. According to an embodiment, the battery 450 may have a shape extending long in the first direction or the second direction, but is not limited thereto.

According to an embodiment, the driving unit 460 may include a motor 461, a pinion gear 462, and a rack gear 463. The motor 461, the pinion gear 462, and the rack gear 463 of FIGS. 4A and 4B may be substantially the same as a motor 261, a pinion gear 262, and a rack gear 263 of FIGS. 3A and 3B, respectively, so overlapping descriptions will be omitted.

According to an embodiment, the motor 461 may provide driving force to the second housing 420. For example, the motor 461 may rotate a shaft 461a based on the power supplied from the battery 450. As the shaft 461a rotates, the pinion gear 462 rotatably coupled to the motor 461 may rotate. When the pinion gear 462 rotates, the rack gear 463 engaged with the pinion gear 462 may move in the first direction or the second direction. As the rack gear 463 moves, the second housing 420 coupled to the rack gear 463 may move in the moving direction of the rack gear 463.

According to an embodiment, the rack gear 463 may be inserted into the frame cover 413 or may be extracted from the frame cover 413 according to movement of the second housing 420. The rack gear 463 may be insertable into the third periphery 413e of the frame cover 413 or may be extractable from the third periphery 413e of the frame cover 413. For example, the third periphery 413e may include an operating space 413p capable of accommodating the rack gear 463. The rack gear 463 may be movable in the operating space 413p by receiving driving force from the motor 461. For example, the operating space 413p may be an empty space extending in the direction from the first periphery 413c to the second periphery 413d, but is not limited thereto.

According to an embodiment, the motor 461 may be disposed close to one end of the rack gear 463 when the electronic device 400 is in the first state. For example, when the electronic device 400 is in the first state, the pinion gear 462 coupled to the motor 461 may be engaged with one end of the rack gear 463 facing the first direction.

According to an embodiment, the motor 461 may be close to the first periphery 413c among the first periphery 413c and the second periphery 413d of the frame cover 413. An operating range r of the rack gear 463 moved by the motor 461 may correspond to a moving range of the second housing 420. As the moving range of the second housing 420 increases, an expandable range of the display 430 increases, and thus a location of the motor 461 that moves the rack gear 463 may be important. In order to maximize the expandable range of the display 430, the motor 461 may be disposed on the portion of the frame cover 413 facing the first direction in which the display 430 is expanded. For example, in case that the motor 461 is disposed at the second periphery 413d of the frame cover 413 facing the second direction opposite to the direction in which the display 430 is expanded, a space for the rack gear 463 to move may not be secured. If the space in which the rack gear 463 may move is not secured, the expandable range of the display 430 may be relatively small. In the electronic device 400 According to an embodiment, since the motor 461 is disposed at the first periphery 413c of the frame cover 413 facing the first direction in which the display 430 is expanded, the space in which the rack gear 463 may move is maximized, and the structure that maximizes the expandable range of the display 430 may be provided.

According to an embodiment, the motor 461 may be spaced apart from the second region 430b of the display 430 when looking at the display 430 from above (e.g., -z direction). For example, the motor 461 may be spaced apart from the second region 430b in the first direction when looking at the display 430 from above (e.g., -z direction).

According to an embodiment, the motor 461 may be close to the side 420a among the side 420a of the second housing 420 facing the first direction and the second periphery 413d of the frame cover 413 when the electronic device 400 is in the first state. A distance in the direction parallel to the first direction from the second periphery 413d to the motor 461 may be longer than a distance parallel to the first direction from the first periphery 413c to the side 420a of the second housing 420. For example, the length from the side 420a of the second housing 420 to the second periphery 413d of the frame cover 413 may correspond to the length of the electronic device 400, and the distance from the first periphery 413c to the second periphery 413d may correspond to the length of the frame cover 413. When the ratio of the length of the frame cover 413 to the length of the electronic device 400 increases based on when the electronic device 400 is in the first state, the expandable range of the display 430 may increase. For example, as the length of the frame cover 413 increases, the working range r of the rack gear 463 increases, so that a difference between the area of the display 430 when the electronic device 400 is in the first state and the area of the display 430 when the electronic device 400 is in the second state may increase. As the difference in area of the display 430 that occurs as the electronic device 400 switches from the first state to the second state increases, the electronic device 400 may provide content to the user based on various screen ratio. The electronic device 400 according to an embodiment may provide the structure capable of maximizing the working range r of the rack gear 463 by the frame cover 413 having a greater distance from the first periphery 413c to the second periphery 413d than the distance from the side 420a to the first periphery 413c. Since the electronic device 400 according to an embodiment may maximize the expandable range of the display 430 by the motor 461 disposed at the first periphery 413c, content may be provided to the user based on various screen ratio. For example, the screen ratio that the electronic device 400 may provide may be 4 to 3 when the electronic device 400 is in the first state and 21 to 9 when the electronic device 400 is in the second state, but is not limited thereto.

According to an embodiment, the first printed circuit board 470 may be disposed in the second housing 420 and electrically connect one or more electronic components of the electronic device 400. For example, the first printed circuit board 470 may be electrically connected to a processor (e.g., a processor 120 of FIG. 1) and the display 430. According to an embodiment, the first printed circuit board 470 may be disposed on one surface 421c of the front cover 421.

According to an embodiment, the first printed circuit board 470 may extend from the second housing 420, so that at least the portion may be inserted into the first housing 410. For example, the first printed circuit board 470 may extend from the front cover 421, so that at least the portion may be inserted into the frame cover 413. At least the portion of the first printed circuit board 470 may be accommodated in an accommodating space 413g in the frame cover 413. The accommodation space 413g of the frame cover 413 may extend in a direction from the first periphery 413c to the second periphery 413d along the fourth periphery 413f.

According to an embodiment, the first printed circuit board 470 may be spaced apart from the battery 450. The first printed circuit board 470 may cover at least the portion of the battery 450. For example, the first printed circuit board 470 may surround at least the portion of the side of the battery 450. According to an embodiment, at least the portion of the first printed circuit board 470 may be bent. For example, the portion of the first printed circuit board 470 may be bent and extend along the first periphery 413c of the frame cover 413. The portion of the first printed circuit board 470 extending along the first periphery 413c may be electrically connected to the third printed circuit board 490 through a connector.

According to an embodiment, the second printed circuit board 480 may be electrically connected to the battery 450 and the motor 461. The second printed circuit board 480 may be electrically connected to the first printed circuit board 470. For example, the second printed circuit board 480 may be electrically connected by a flexible printed circuit board (not illustrated) extending between the first printed circuit board 470 and the second printed circuit board 480. According to an embodiment, the second printed circuit board 480 may be disposed in the first housing 410. For example, the second printed circuit board 480 may be disposed on the frame cover 413 included in the first housing 410. According to an embodiment, the second printed circuit board 480 may be spaced apart from the battery 450. For example, the second printed circuit board 480 may be spaced apart from the battery 450 and may be close to the first periphery 413c among the first periphery 413c and the second periphery 413d of the frame cover 413. According to an embodiment, the second printed circuit board 480 may be disposed on the frame cover 413 to be adjacent to the motor 461.

According to an embodiment, the third printed circuit board 490 may be disposed in the second housing 420 and electrically connect various components of the electronic device 400. For example, an audio module (e.g., an audio module 170 of FIG. 1) may be disposed on the third printed circuit board 490. According to an embodiment, the third printed circuit board 490 may be disposed between the side 420a of the second housing 420 and the first periphery 413c of the frame cover 413. For example, the third printed circuit board 490 may be disposed on one surface 421c of the front cover 421 facing the first periphery 413c of the frame cover 413. According to an embodiment, a size of the third printed circuit board 490 may be smaller than a size of the first printed circuit board 470. For example, the number of electronic components included in the third printed circuit board 490 may be smaller than the number of electronic components included in the first printed circuit board 470. As the size of the third printed circuit board 490 is small, the third printed circuit board 490 may be disposed in a relatively small space between the first periphery 413c of the frame cover 413 and the side 420a of the second housing 420.

According to an embodiment, the first printed circuit board 470 may be extractable from the first housing 410 or may be insertable into the first housing 410 according to movement of the second housing 420. For example, when the second housing 420 moves in the first direction, the first printed circuit board 470 may move in the first direction and be extracted from the frame cover 413. For another example, when the second housing 420 moves in the second direction, the first printed circuit board 470 may move in the second direction and be inserted into the frame cover 413. Since the first printed circuit board 470 has a relatively large size so that the electronic device 400 may provide a various function to the user, the first printed circuit board 470 may occupy both the mounting space in the first housing 410 and the second housing 420. As the first printed circuit board 470 occupies the mounting space in the first housing 410 and the second housing 420, the first printed circuit board 470 may be inserted into the first housing 410 or may be extracted from the first housing 410 by movement of the second housing 420.

As described above, the electronic device 400 according to an embodiment may provide the structure that maximizes the expandable range of the display 430 by the motor 461 disposed at the first periphery 413c of the frame cover 413 facing the expansion direction of the display 430. The electronic device 400 according to an embodiment may provide the structure that maximizes the expandable range of the display 430 by the frame cover 413 whose distance from the first periphery 413c to the second periphery 413d is longer than the distance from the side 420a of the second housing 420 to the first periphery 413c of the frame cover 413.

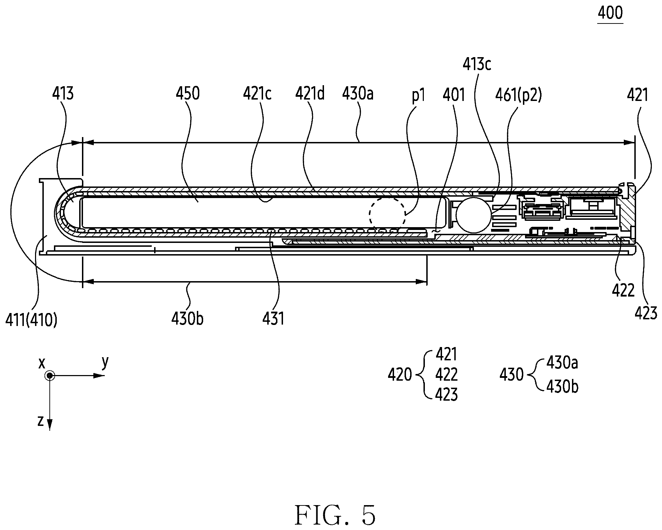

FIG. 5 is a cross-sectional view illustrating an example of an electronic device cut along line B-B' of FIG. 4A according to an embodiment.

Referring to FIG. 5, according to an embodiment, a first housing 410 may include a book cover 411 (e.g., a book cover 211 of FIGS. 3A and 3B). The book cover 411 may form at least a portion of the outer surface of the electronic device 400.

According to an embodiment, a display 430 may include a first region 430a (e.g., a first region 230a of FIGS. 3A and 3B) and a second region 430b. According to an embodiment, the first region 430a may be disposed on the other surface 421d of a front cover 421 facing one surface 421c of the front cover 421.

According to an embodiment, a guide member 431 (e.g., a guide member 331 of FIGS. 3A and 3B) may be disposed in the second region 430b of the display 430. The guide member 431 may include a plurality of bars extending in a third direction (e.g., +x direction) perpendicular to a first direction. The guide member 431 may be disposed only in the second region 430b of the display 430 and may not be disposed in the first region 430a.

According to an embodiment, the second housing 420 may include a rear cover 422 and a slide cover 423. The rear cover 422 may be coupled to the front cover 421, and protect components inside the front cover 421. According to an embodiment, the rear cover 422 may be coupled to the front cover 421 to face the first region 430a of the display 430. The slide cover 423 may be disposed between the rear cover 422 and the book cover 411. According to an embodiment, the front cover 421, the rear cover 422, and the slide cover 423 may move relatively together relative to the first housing 410.

According to an embodiment, a motor 461 may be disposed between the rear cover 422 and the front cover 421. According to an embodiment, the motor 461 may be spaced apart from the second region 430b of the display 430 along the first direction. For example, when looking at the display 430 from above (e.g., -z direction), the motor 461 may overlap only the first region 430a among the first region 430a and the second region 430b. As the motor 461 is spaced apart from the second region 430b, the motor 461 may be spaced apart from at least the portion of the guide member 431 disposed in the second region 430b when looking at the display 430 from above (e.g., -z direction). According to an embodiment, a first periphery 413c of the frame cover 413 on which the motor 461 is disposed may overlap only the first region 430a among the first region 430a and the second region 430b when the display 430 is viewed from above (e.g., -z direction).

According to an embodiment, as the motor 461 is spaced apart from the second region 430b, thickness (e.g., length in the z-axis direction) of the electronic device 400 may decrease. Thickness of the electronic device 400 may correspond to the sum of thicknesses of each of the components disposed between the first region 430a of the display 430 and the book cover 411. In case that the motor 461 is disposed at a first position p1 overlapping the second region 430b, thickness of each of the second region 430b and the guide member 431 may be included in thickness of the electronic device 400. Since each thickness of the second region 430b and the guide member 431 is included, in case that the motor 461 is disposed at the first position p overlapping the second region 430b, the thickness of the electronic device 400 may be increased compared to in case that the motor 461 is disposed at the second position p2 spaced apart from the second region 430b. The electronic device 400 according to an embodiment may provide the structure capable of reducing the overall thickness of the electronic device 400 since thickness of the second region 430b adjacent to the motor 461 and the guide member 431 are excluded from thickness of the electronic device 400 by the motor 461 disposed at the second position p2 in the first direction (e.g., +y direction) from the second region 430b.

As described above, the electronic device 400 according to an embodiment may provide a structure capable of minimizing thickness of the electronic device 400 while maximizing the expandable range of the display 430 by the motor 461 spaced apart from the second region 430b of the display 430.

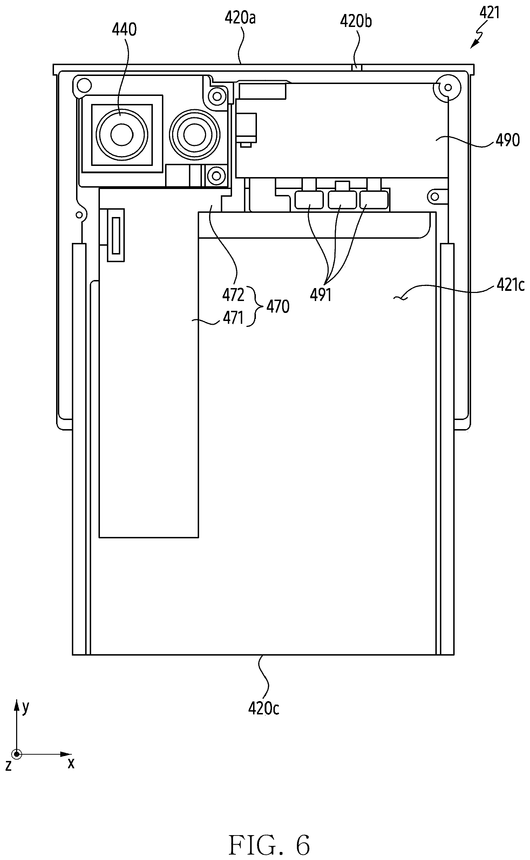

FIG. 6 is a rear view of a frame cover of the second housing of an electronic device according to an embodiment.

Referring to FIG. 6, according to an embodiment, a first printed circuit board 470 may include a first portion 471 and a second portion 472 extending in different directions. According to an embodiment, the first portion 471 may extend in a second direction (e.g., -y direction). For example, the first portion 471 may extend from a camera 440 along the second direction on one surface 421c of a front cover 421. According to an embodiment, the second portion 472 may extend in a third direction (e.g., +x direction) perpendicular to the second direction (e.g., -y direction). For example, the second portion 472 may extend from the camera 440 in the third direction on one surface 421c of the front cover 421. The second portion 472 may be electrically connected to a third printed circuit board 490 through a connector 491. According to an embodiment, at least the portion of the first printed circuit board 470 may be bent. For example, since the first portion 471 and the second portion 472 are in vertical contact with each other, the first printed circuit board 470 may have a shape in which at least the portion is bent.

In FIG. 6, the first printed circuit board 470 is illustrated as including the second portion 472, but this is only an example. According to embodiments, the first printed circuit board 470 may not include the second portion 472. In case that the first printed circuit board 470 does not include the second portion 472, the motor (e.g., a motor 461 of FIGS. 4A and 4B) may be disposed closer to the side 420a of the second housing 420. As the motor 461 becomes closer to the side 420a of the second housing 420, an expandable range of the display (e.g., a display 430 of FIGS. 4A and 4B) may increase. In case that the second portion 472 is omitted, the connector 491 connecting the third printed circuit board 490 and the first printed circuit board 470 may be disposed in the first portion 471.

According to an embodiment, the second housing 420 may include an audio hole 420b. For example, the audio hole 420b may be disposed on the side 420a facing the first direction of the second housing 420. According to an embodiment, the third printed circuit board 490 may include an audio module (e.g., an audio module 170 of FIG. 1). The audio hole 420b may provide a passage through which audio outputted from the audio module 170 is transmitted to the outside of the electronic device 400. For example, in case that the audio hole 420b is disposed on the other side 420c of the second housing 420 facing the second direction (e.g., -y direction), the electronic device 400 may not smoothly transmit audio information to a user since the other side 420c is adjacent to the display 430. In order to smoothly transmit audio information to the user, the audio hole 420b may be disposed on the side 420a of the second housing 420 facing the first direction. As the audio hole 420b is disposed on the side 420a of the second housing 420, the third printed circuit board 490 including the audio module 170 may be disposed close to the side 420a of the second housing 420.

As described above, the electronic device 400 according to an embodiment may provide a various function to the user by the first printed circuit board 470 capable of mounting various electronic components in a limited mounting space.

According to an embodiment, the electronic device (e.g., an electronic device 400 of FIGS. 4A and 4B) may include a first housing (e.g., the first housing 410 of FIGS. 4A and 4B), a second housing (e.g., the second housing 420 of FIGS. 4A and 4B) coupled to the first housing to be slidable in a first direction relative to the first housing, and a display (e.g., a display 430 of FIGS. 4A and 4B) including a first region (e.g., a first region 430a of FIG. 5) in contact with one surface (e.g., the other surface 421d of a front cover 421 of FIGS. 4A and 4B) of the second housing and a second region (e.g., the second region 430b of FIGS. 4A and 4B) deformable according to movement of the second housing. According to an embodiment, the electronic device may include a motor (e.g., a motor 461 of FIGS. 4A and 4B) disposed in the first housing and to provide driving force to the second housing. According to an embodiment, the first housing may include a frame cover (e.g., a frame cover 413 of FIGS. 4A and 4B) including a first periphery (e.g., a first periphery 413c of FIGS. 4A and 4B) facing the first direction and a second periphery (e.g., a second periphery 413d of FIGS. 4A and 4B) opposite to the first periphery and facing a second direction opposite to the first direction, and accommodating the motor. According to an embodiment, the motor may be close to the first periphery among the first periphery and the second periphery. According to an embodiment, the motor may be spaced the outside of the second region, when the display is viewed from above.

According to an embodiment, the electronic device may further include a first printed circuit board (e.g., a first printed circuit board 470 of FIGS. 4A and 4B) disposed in the second housing, and including one or more electronic components. According to an embodiment, when the second housing moves in the first direction, the first printed circuit board may be extracted from the frame cover, and when the second housing moves in the second direction, the first printed circuit board may be inserted into the frame cover.

According to an embodiment, the frame cover may include a third periphery (e.g., a third periphery 413e of FIGS. 4A and 4B) extending along the second direction to connect the first periphery and the second periphery, and a fourth periphery (e.g., a fourth periphery 413f of FIGS. 4A and 4B) parallel to the third periphery and spaced apart from the third periphery along a third direction perpendicular to the first direction. According to an embodiment, the frame cover may further include an accommodating space (e.g., the accommodating space 413g of FIGS. 4A and 4B) extended along the second direction along the fourth periphery and accommodating at least the portion of the first printed circuit board.

According to an embodiment, the first printed circuit board may include the first portion (e.g., a first portion 471 of FIG. 6) extending in the second direction, and the second portion (e.g., a second portion 472 of FIG. 6) connected to the first portion and extending in the third direction in which the second direction is perpendicular.

According to an embodiment, the second housing may further include a front cover (e.g., a front cover 421 of FIGS. 4A and 4B) in contact with at least the portion of the first region, and a rear cover (e.g., a rear cover 422 of FIG. 5) coupled to the front cover to face one surface (e.g., one surface 421c of a front cover 421 of FIG. 5) of the front cover. According to an embodiment, the motor may be interposed between the front cover and the rear cover.

According to an embodiment, a pinion gear (e.g., a pinion gear 462 of FIGS. 4A and 4B) coupled to the motor so as to be rotatable relative to the motor, and a rack gear (e.g., the rack gear 463 of FIGS. 4A and 4B) disposed in the second housing and one end facing the first direction is in contact with the pinion gear and is movable according to a rotation of the pinion gear may be further included.

According to an embodiment, the frame cover may further include an operating space (e.g., an operating space 413p of FIGS. 4A and 4B) extending in the third periphery along the first direction. According to an embodiment, the rack gear may perform rectilinear reciprocating motion in the operating space.

According to an embodiment, the motor may be spaced apart from the second region in the first direction.

According to an embodiment, the first periphery may overlap only the first region among the first region and the second region, when the display is viewed from above.

According to an embodiment, the electronic device may further include a guide member (e.g., a guide member 431 of FIG. 5) including a plurality of bars disposed in the second region among the first region and the second region of the display, and a guide rail (e.g., a guide rail 432 of FIGS. 4A and 4B) perpendicular to the first periphery and coupled to both peripheries of the frame cover facing each other, and guiding movement of the guide member.

According to an embodiment, the motor may be disposed at the outside of at least the portion of the guide member disposed in the second region, when the display is viewed from above.

According to an embodiment, a battery (e.g., a battery 450 of FIGS. 4A and 4B) disposed on the frame cover and extending in the first direction may be further included to have a length.

According to an embodiment, a book cover (e.g., a book cover 211 of FIG. 3A) surrounding the frame cover and forming at least the portion of the outer surface of the first housing, and a wireless charging antenna (e.g., a wireless charging antenna 211c of FIG. 3A) disposed on one surface of the book cover may be further included.

According to an embodiment, the second housing may be slidable between a first state and a second state, the first state in which the second housing is movable in the first direction among the first direction and the second direction, and the second state in which the second housing is movable in the second direction among the first direction and the second direction. According to an embodiment, the second region is disposed in an internal space (e.g., an internal space 401 of FIG. 5) formed by the first housing and the second housing in the first state.

According to an embodiment, the second housing may include a side (e.g., the side 420a of a second housing 420 of FIGS. 4A and 4B) facing the first direction. According to an embodiment, a distance from the motor to the second periphery may be longer than a distance from the motor to the side in the first state.

According to an embodiment, the second housing may perform rectilinear reciprocating motion relative to the first housing.

According to an embodiment, the electronic device may further include a second printed circuit board (e.g., a third printed circuit board 490 of FIGS. 4A and 4B), on which an audio module is disposed, disposed in the second housing. According to an embodiment, the second housing may include an audio hole (e.g., an audio hole 420b of FIG. 6) that provides a path through which audio outputted from the audio module is transmitted to the outside of the electronic device.

According to an embodiment, the electronic device (e.g., the electronic device 400 of FIGS. 4A and 4B) may include a first housing (e.g., the first housing 410 of FIGS. 4A and 4B), a second housing (e.g., the second housing 420 of FIGS. 4A and 4B) coupled to the first housing to be slidable in a first direction relative to the first housing, and a display (e.g., a display 430 of FIGS. 4A and 4B) including a first region (e.g., the first region 430a of FIG. 5) contacted with a surface (e.g., the other surface 421d of a front cover 421 of FIGS. 4A and 4B) of the second housing, and a second region (e.g., a second region 430b of FIGS. 4A and 4B) deformable according to movement of the second housing. According to an embodiment, the electronic device may include a motor (e.g., a motor 461 of FIGS. 4A and 4B) disposed in the first housing and to provide driving force to the second housing, a pinion gear (e.g., a pinion gear 462 of FIGS. 4A and 4B) rotatably coupled to the motor, and a rack gear (e.g., a rack gear 463 of FIGS. 4A and 4B) disposed in the second housing, engaged with the pinion gear, and movable according to a rotation of the pinion gear. According to an embodiment, the first housing may include a frame cover (e.g., a frame cover 413 of FIGS. 4A and 4B) accommodating the motor, the frame cover including a first periphery (e.g., a first periphery 413c of FIGS. 4A and 4B) facing the first direction, a second periphery spaced apart from the first periphery and facing a second direction opposite to the first direction, a third periphery (e.g., a third periphery 413e of FIGS. 4A and 4B) perpendicular to the first periphery and accommodating the rack gear, and a fourth periphery (e.g., a fourth periphery 413f of FIGS. 4A and 4B) parallel to the third periphery and opposite to the third periphery. According to an embodiment, the motor may be is closer to the first periphery among the first periphery and the second periphery. According to an embodiment, the motor may be spaced apart from a portion of the second region disposed in the second housing, when the display is viewed from above.

According to an embodiment, the second region may overlap the portion of the frame cover including the second periphery among the first periphery and the second periphery when the display is viewed from above. According to an embodiment, the motor may be spaced apart from the second region in the first direction.

According to an embodiment, the electronic device may further include a first printed circuit board (e.g., a first printed circuit board 470 of FIGS. 4A and 4B) disposed in the second housing and including one or more electronic components. According to an embodiment, the first printed circuit board may be insertable into the frame cover or extractable from the frame cover while facing the rack gear according to movement of the second housing.

According to an embodiment, the frame cover may further include an accommodating space (e.g., an accommodation space 413g of FIGS. 4A and 4B) extended along the fourth periphery in a direction from the first periphery to the second periphery. According to an embodiment, the first printed circuit board may be movable in the accommodation space according to movement of the second housing.

According to an embodiment, the electronic device may further include a battery (e.g., a battery 450 of FIGS. 4A and 4B) disposed between the third periphery and the fourth periphery.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing;
a second housing disposed to be slidable relative to the first housing; and
a rollable display including a first region exposed to an outside of the electronic device in a slide-in state of the second housing, and a second region exposed to the outside of the electronic device in a slide-out state of the second housing;
a guide member disposed on a surface of the rollable display to support at least portion of the rollable display;
a motor disposed in the first housing and to provide driving force to drive the second housing;
a battery disposed in the first housing and to supply power to the motor;
a pinion gear disposed in the first housing and rotatable based on the driving force of the motor; and
a rack gear disposed in the second housing and movable by engaging the pinion gear,
wherein, in the slide-in state of the second housing, the second region of the rollable display is disposed so as not to overlap the motor, when the rollable display is viewed from above.

2. The electronic device of claim 1, further comprising:
a first printed circuit board (PCB) disposed in the second housing; and
a second PCB disposed in the first housing,
wherein the first PCB is spaced apart from the second PCB and the battery, and surrounds at least portion of a side of the battery.

3. The electronic device of any one of claim 1 or 2,
wherein the second housing is movable in a first direction or a second direction opposite to the first direction,
wherein the first housing comprises a frame cover including a first periphery facing the first direction and a second periphery opposite to the first periphery and facing the second direction opposite to the first direction, and accommodating the motor, and
wherein the motor is closer to the first periphery among the first periphery and the second periphery, and is spaced apart from the second region, when the rollable display is viewed from above.

4. The electronic device of claim 3, further comprising:
a first PCB disposed in the second housing and comprising one or more electronic components,
wherein the first PCB is insertable into the frame cover or extractable from the frame cover according to movement of the second housing.

5. The electronic device of claim 4,
wherein the frame cover further includes:
a third periphery perpendicular to the first periphery and facing a shaft of the motor,
a fourth periphery parallel to the third periphery and opposite to the third periphery, and
an accommodating space extended along the fourth periphery in a direction from the first periphery to the second periphery and accommodating at least portion of the first PCB.

6. The electronic device of any one of claim 4 or 5, wherein a portion of the first PCB is bent and extends along the first periphery.

7. The electronic device of any one of claims 1 to 6,
wherein the second housing further comprises:
a front cover coupled to a portion of the rollable display, and
a rear cover coupled to the front cover to face the portion of the rollable display, and
wherein the motor is disposed between the front cover and the rear cover.

8. The electronic device of any one of claims 3 to 7,
wherein the frame cover further comprises an operating space extending from the first periphery toward the second periphery, and
wherein the rack gear is movable in the operating space.

9. The electronic device of any one of claims 3 to 8, wherein the motor is spaced apart from the second region in the first direction.

10. The electronic device of any one of claims 3 to 9, wherein the first periphery overlaps the first region among the first region and the second region, when the rollable display is viewed from above.

11. The electronic device of any one of claims 1 to 10, further comprises:
a guide rail disposed in the first housing and guiding a movement of the guide member.

12. The electronic device of any one of claims 1 to 11, wherein the motor is spaced apart from at least portion of the guide member disposed on the second region, when the rollable display is viewed from above.

13. The electronic device of any one of claims 1 to 12,
wherein the second housing is slidable between a first state and a second state, the first state in which the second housing is movable in a first direction among the first direction and a second direction opposite to the first direction, and the second state in which the second housing is movable in the second direction among the first direction and the second direction, and
wherein the second region is disposed in an internal space formed by the first housing and the second housing in the first state.

14. The electronic device of claim 13,
wherein the first housing comprises a frame cover including a first periphery facing the first direction and a second periphery opposite to the first periphery and facing the second direction opposite to the first direction, and accommodating the motor,
wherein the second housing comprises a side facing the first direction, and
wherein the motor is closer to the side among the side and the second periphery in the first state.

15. The electronic device of any one of claims 1 to 14, further comprising:
a second PCB, on which an audio module is disposed, is disposed in the second housing,
wherein the second housing comprises an audio hole that provides a path through which audio output from the audio module is transmitted to the outside of the electronic device.
